(19) Europäisches Patentamt

European Patent Office

Office européen des brevets

(11) **EP 0 534 399 B1**

(12) **EUROPÄISCHE PATENTSCHRIFT**

(45) Veröffentlichungstag und Bekanntmachung des Hinweises auf die Patenterteilung:
**18.12.1996   Patentblatt 1996/51**

(51) Int Cl.⁶: **H04B 7/01**

(21) Anmeldenummer: **92116274.9**

(22) Anmeldetag: **22.09.1992**

(54) **Zeitmultiplex-Verfahren zur Bestimmung der mittleren Phasenänderung eines Empfangssignals**

Time multiplex method for determining the average phase change of a received signal

Procédé de multiplexage temporel pour déterminer la variation de phase d'un signal de réception

(84) Benannte Vertragsstaaten:
**DE FR GB**

(30) Priorität: **27.09.1991   DE 4132200**

(43) Veröffentlichungstag der Anmeldung:
**31.03.1993   Patentblatt 1993/13**

(73) Patentinhaber: **AEG MOBILE COMMUNICATION GmbH**
**D-89081 Ulm (DE)**

(72) Erfinder:
- **Langewellpott, Ulrich, Dr.-Ing.**
  **Verstorben (DE)**
- **Dressler, Hans-Joachim, Dipl.-Ing.**
  **W-7909 Dornstadt (DE)**
- **Reiner, Michael, Dipl.-Ing.**
  **W-7900 Ulm/Donau (DE)**

(74) Vertreter: **Körner, Ekkehard, Dipl.-Ing.**
**Patentanwalt**
**Maximilianstrasse 58**
**80538 München (DE)**

(56) Entgegenhaltungen:
- **FREQUENZ Bd. 44, Nr. 7/8, Juli 1990, BERLIN DE,Seiten 217 - 221;PLAGGE ET AL.:'Neues Verfahren zur Messung der Kanalstossantwort und Trägersynchronisation in digitalen Mobilfunktionen'**
- **"Performance of Viterbi Equalisers for the GSM System". Second IEE National Conference on Telecommunications. 2-5-April 1989. Lopes p.61-66**
- **"Design of a digital receiver for the GSM cellular system." Treizieme Colloque sur le Traitement du Signal et des Images. Juan-Les Pins. 16-20 September 1991 & Benelli et al., p. 477-480, Absatz 4: "A Digital Receiver for the GSM System".**

**Beschreibung**

Die Erfindung bezieht sich auf ein Zeitmultiplex-Verfahren zur Bestimmung der mittleren Phasenänderung des Empfangssignals nach dem Oberbegriff des Anspruchs 1. Ein Verfahren dieser Art ist aus der Zeitschrift Frequenz, Band 44, Nr. 7/8, Juli 1990, Seiten 217 bis 221 bekannt.

Bei solchen Verfahren wird der Übertragungskanal durch eine Kanalimpulsantwort beschrieben. Diese wird im Empfänger zum Beispiel durch Korrelation geschätzt. Die Schätzung kann in bestimmten zeitlichen Abschnitten wiederholt werden.

Die Erfindung ist insbesondere zur Anwendung bei digitalen Kommunikationsnetzen, insbesondere Mobilfunksystemen, wie dem GSM-System, vorgesehen. Beim Mobilfunk ist die Kanalimpulsantwort durch den Dopplereffekt zeitlich veränderlich. Es stellt sich daher das Problem, diese Änderungen in einem Empfänger zu schätzen und zu berücksichtigen. Vorbekannte Lösungen sind beispielsweise:

a) die Kanalimpulsantwort wird im gesamten Zeitschlitz als konstant angenommen.

b) Die Kanalimpulsantwort wird vollständig im Zeitschlitz nachgeführt. Dies bedeutet, die zeitliche Veränderung der Mehrwegeausbreitung und damit die Form der Kanalimpulsantwort für alle Zeitpunkte im Zeitschlitz zu schätzen. Die Nachführung kann mit Hilfe eines Kalmanfilters geschehen. In jedem Falle ist entweder eine Entscheidungsrückkopplung erforderlich, oder es sind weitere Stützstellen (d.h. dem Empfänger bekannte feste Sequenzen) im Zeitschlitz erforderlich. Auch ist eine Interpolation der Kanalimpulsantwort im ganzen Zeitschlitz möglich, falls hintereinanderliegende Zeitschlitze auf der gleichen Frequenz entsprechend dicht liegen und die Geschwindigkeit nicht zu groß ist (Literatur: Hoher, P.: Kohärenter Empfang trelliscodierter PSK-Signale auf frequenzselektiven Mobilfunkkanälen - Entzerrer, Decodierung und Kanalparameterschätzung, Fortschritt-Bericht VDI, Dissertation, Universität Kaiserslautern, Mai 1990).

Die bekannten Verfahren haben den Nachteil, daß bei hohen Geschwindigkeiten sich eine entsprechend hohe Bitfehlerrate ergibt und daß entsprechende Verfahren sehr aufwendig sind.

Im Falle von Entscheidungsrückführung reagieren diese Verfahren sehr empfindlich auf Bitfehler. Bei kleiner Geschwindigkeit und hohen Störpegeln ergibt sich eine große Degradation der Empfindlichkeit im Vergleich zu einem einfachen Empfänger, bei dem die Kanalimpulsantwort im Zeitschlitz als konstant angenommen wird.

Werden Stützstellen im Zeitschlitz verwendet, so bedeutet dies natürlich eine Verkleinerung der Übertragungskapazität. Die Benutzung von Nachbarzeitschlitzen verbietet die Benutzung eines Frequenzsprungverfahrens, welches große Vorteile bei Fading aufweißt, und die TDMA Struktur muß an die maximale Geschwindigkeit angepasst werden.

Der Erfindung liegt deshalb die Aufgabe zugrunde, ein Verfahren der eingangs gennanten Art anzugeben, bei dem eine Dopplerkorrektur und Trägerfrequenzkorrektur bei Übertragung in Zeitmultiplex-Systemen mit linearen, digitalen Modulationen mit konstanter Einhüllender unter Minimierung des Aufwandes bei gleichzeitig hoher Empfangsqualität erreicht wird.

Diese Aufgabe wird gelöst durch die im Patentanspruch 1 angegebenen Merkmale. Vorteilhafte Ausgestaltungen und/oder Weiterbildungen sind den Unteransprüchen zu entnehmen.

Es wird davon ausgegangen, daß die Zeitschlitze des TDMA-Systems in der Mitte eine dem Empfänger bekannte Trainingssequenz enthalten, mit deren Hilfe die Kanalimpulsantwort gemessen werden kann. Die Erfindung besteht zunächst aus der Vorabdemodulation des mittleren Teiles eines Zeitschlitzes. Danach kann eine mittlere Phasendrehung berechnet werden. Diese beschreibt in guter Näherung auch bei Mehrwegeausbreitung und bei beliebigem Dopplerspektrum (z.B. symmetrisches Dopplerspektrum) die Änderung der Kanalimpulsantwort innerhalb eines Zeitschlitzes. Die endgültige Demodulation erfolgt dann in mehreren Bereichen innerhalb eines Zeitschlitzes. In jedem Bereich wird hierzu die Kanalimpulsantwort als konstant angenommen und entsprechend der mittleren Phasendrehung berechnet. Nach Mittelung über mehrere Zeitschlitze kann die Phasendrehung auch für die Berechnung der Stellgröße für die analogen Trägerfrequenzerzeugung verwendet werden.

Die Erfindung hat den Vorteil, daß lediglich kleine Bitfehlerraten bei hohen Geschwindigkeiten auch bei Mehrwegeausbreitung mit einer maximalen Mehrwegeverzögerung, welche größer als die Symboldauer ist, auftreten. Gleichzeitig ist nur ein geringer Mehraufwand erforderlich im Vergleich zu einem einfachen Verfahren, welches von einer konstanten Kanalimpulsantwort über den gesamten Zeitschlitz ausgeht. Durch die Dopplerkorrektur ergibt sich keine Verschlechterung der Empfindlichkeit bei kleinen Geschwindigkeiten. Weitere Stützstellen außerhalb der Trainingssequenz werden nicht benötigt. Bei Intersymbolinterferenz kann wie bei einem einfachen Verfahren z.B. ein Viterbi Entzerrer verwendet werden, der von einer konstanten Autokorrelationsfunktion der Kanalimpulsantwort über den gesamten Zeitschlitz ausgeht. Die Erfindung benötigt kein Gedächtnis über mehr als einen Zeitschlitz, und damit ist ein Frequenzsprungverfahren möglich.

Die Erfindung wird im folgenden anhand von Ausführungsbeispielen beschrieben unter Bezugnahme auf schematische Zeichnungen.

Es werden ein digitales Modulationsverfahren (z.B. Phase Shift Keying PSK oder Minimum Shift Keying MSK) und ein linearer Übertragungskanal betrachtet. Es ist allgemein bekannt, daß das Empfangssignal y(t) dann durch die Faltung einer Kanalimpulsantwort p(t,τ) mit den gesendeten komplexen oder reellen Symbolen $a_k$ beschrieben werden kann:

$$\underline{y}(t) = \int_{-\infty}^{\infty} \underline{p}(t, \tau) \sum_k \underline{a}_k \delta(t - \tau - kT) \mathrm{d}\tau$$

Die Kanalimpulsantwort gibt die Eigenschaften sowohl der Modulation als auch des Funkkanales wieder (Mehrwegeausbreitung). Sie beschreibt die Antwort der Übertragungsstrecke zum Zeitpunkt t auf einen Dirac-Stoß als Eingangssignal in Abhängigkeit der Verzögerung τ. Die Kanalimpulsantwort wird zunächst als zeitveränderlich angesehen. Durch Dopplerverschiebungen ändert sich z.B. im Mobilfunk die Form der Kanalimpulsantwort nach einer gewissen Wegstrecke vollständig. Ist die maximale Mehrwegeverzögerung klein gegenüber der Symboldauer, so kann die zeitliche Veränderung der Kanalimpulsantwort durch eine Amplituden- und Phasenänderung beschrieben werden. Die Form der Kanalimpulsantwort hängt dann nicht mehr vom Funkkanal ab. Es wird nun ein TDMA-System betrachtet, bei dem für die Mehrwegeverzögerung mehrere Symbollängen zugelassen werden. Jeder Zeitschlitz besitzt in der Mitte eine feste dem Empfänger bekannte Symbolsequenz, die als Trainingssequenz bezeichnet wird. Mit ihr wird die Kanalimpulsantwort in der Mitte des Zeitschlitzes gemessen werden. Für eine richtige Demodulation muß jedoch auch die zeitliche Änderung der Kanalimpulsantwort innerhalb eines Zeitschlitzes bekannt sein. Auch dann, wenn die Mehrwegeverzögerung die Dauer eines Symboles deutlich überschreitet, wird die zeitliche Änderung der Kanalimpulsantwort immer noch durch eine mittlere Amplituden- und Phasenänderung beschrieben . Voraussetzung ist, daß der Zeitschlitz nicht zu lang ist, damit die Änderung der Kanalimpulsantwort nicht zu groß wird. Mit dieser Voraussetzung ist der Fehler der obigen Näherung gering. Es gibt also einen Wertebereich für die Länge eines Zeitschlitzes, in dem die Annahme einer zeitinvarianten Kanalimpulsantwort zu merklichen Verlusten der Leistungsfähigkeit bei der Demodulation führt. Die Annahme einer mittleren konstanten Amplituden- und Phasenänderung der Kanalimpulsantwort innerhalb eines Zeitschlitzes führt dann zu einer deutlichen Verbesserung.

Bei Phasenmodulationsarten mit konstanter Einhüllender steckt die Information nur in der Phase und auch bei einer Änderung der Amplitude der Kanalimpulsantwort kann ohne Kenntnis dieser Amplitudenänderung noch richtig demoduliert werden. Deswegen reicht es dann hier aus, nur die mittlere Änderung der Phase zu betrachten.

Es wird angenommen, daß das Empfangssignal bandbegrenzt ist und daher abgetastet werden kann. Die Abtastrate soll n mal die Symbolrate betragen. Das abgetastete Empfangssignal wird nun durch die diskrete Faltung der Symbole mit der abgetasteten Kanalimpulsantwort beschrieben werden.

$$\underline{y}_{ni+k} = \sum_l \underline{a}_{(i-l)} \underline{p}_{t,nl+k} \qquad k = 0, \cdots, n-1$$

$Y_{ni+k}$ sind die empfangenen komplexen Abtastwerte, $P_{t,nl+k}$ ist die Kanalimpulsantwort und die $a_i$ sind die gesendeten komplexen (z.B. 4,8 PSK) oder reellen Symbole (z.B. 2PSK oder MSK).

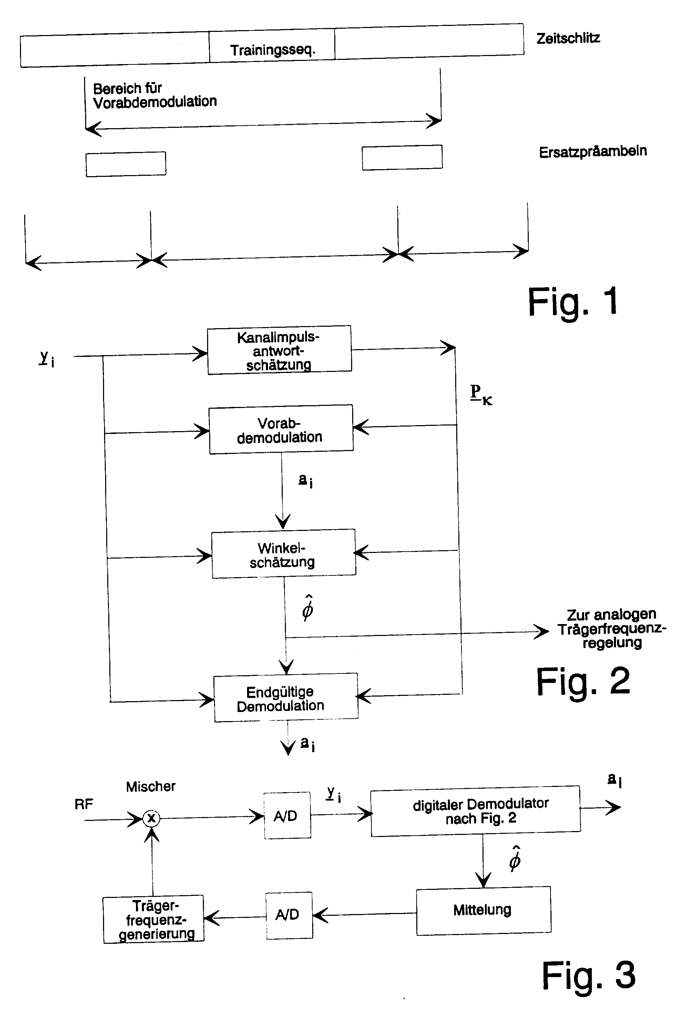

Zunächst wird die Kanalimpulsantwort in der Mitte des Zeitschlitzes mit Hilfe einer festen, dem Empfänger bekannten Trainingssequenz geschätzt. Dann kann in einem mittleren Teil des Zeitschlitzes (siehe FIG. 1) mit Hilfe eines digitalen Matched Filters (an die gemessene Kanalimpulsantwort angepaßt) eine Symbolschätzung vorgenommen werden (Vorabdemodulation).

$$\mathrm{mfo}_i = \sum_k \underline{y}_{ni+k} \underline{p}_k^*$$

Die empfangenen Symbole lassen sich durch eine Harddecision des Ausgangs des Matched Filters $\mathrm{mfo}_i$ bestimmen. Es werden nun rechts und links der Trainingssequenz zwei Bereiche definiert, deren Symbole nun bekannt sind. Diese Bereiche werden im folgenden Ersatzpräambeln genannt. Es wird nun jeweils die mittlere Phasendrehung der Kanalimpulsantwort zwischen dem Bereich einer Ersatzpräambel und dem Bereich der Trainingssequenz geschätzt. Durch Mittelung beider Winkel wird ein endgültiger Wert für die Phasendrehung bestimmt.

Im folgenden wird nun die Schätzung der Phasendrehung mit Hilfe einer Ersatzpräambel und der bereits bekannten Kanalimpulsantwort beschrieben. Es wird vorausgesetzt, daß die Ersatzpräambel so kurz sein soll, daß man die Phase $\phi$ innerhalb der Ersatzpräambel als konstant ansetzen kann. Das Empfangssignal ist dann durch folgende Gleichung gegeben.

$$\underline{y}_{ni+k} = e^{j\phi} \sum_l \underline{a}_{i-l}\underline{p}_{nl+k}$$

Nach dem Maximum Likelihood Prinzip kann jetzt die Phase geschätzt werden. Der folgende Ausdruck muß dazu minimiert werden (der Rauschanteil aufeinanderfolgender Abtastwerte wird als unkorreliert angesehen, weißes Rauschen):

$$\sum_i \sum_{k=0}^{n-1} |\underline{y}_{ni+k} - e^{j\cdot\hat{\phi}} \sum_l \underline{a}_{i-l}\underline{p}_{nl+k}|^2$$

Die Minimierung erfolgt bezüglich $\hat{\phi}$.

Alle anderen Größen sind bereits bekannt und damit fest. Die Minimierung des obigen Ausdrucks läßt sich dann durch die Maximierung des folgenden Ausdrucks erreichen:

$$\mathrm{Re}\{e^{-j\cdot\hat{\phi}} \sum_l \sum_{k=0}^{n-1} \underline{p}_{nl+k}^* \sum_i \underline{y}_{ni+k}\underline{a}_{i-l}^*\}$$

$$= \mathrm{Re}\{e^{-j\cdot\hat{\phi}} \sum_l \sum_{k=0}^{n-1} \underline{p}_{nl+k}^* \sum_i \underline{y}_{n(l+i)+k}\underline{a}_i^*\}$$

Der Realteil wird maximal, falls für $\hat{\phi}$ der Phasenwinkel der Summe gewählt wird. Dies bedeutet, daß zur Berechnung der Phase $\hat{\phi}$ die konjugiert komplexen vorabdemodulierten Symbole der Ersatzpräambel mit dem Empfangsabtastwerten korreliert werden müssen.

Dies entspricht einer erneuten Schätzung der Kanalimpulsantwort. Die bereits bekannte Kanalimpulsantwort wird nun mit der neu geschätzten konjugiert komplexen Kanalimpulsantwort Abtastwert für Abtastwert multipliziert und aufakkumuliert.

Da entsprechend den obigen Voraussetzungen die Phase über einen größeren Bereich als konstant angesehen werden kann, braucht auch bei der endgültigen Bestimmung der empfangenen Symbole der Phasenwinkel nicht Symbol für Symbol nachgeführt werden. Es reicht aus, den Zeitschlitz in mehrere Bereiche einzuteilen, in denen die Phase jeweils wieder als konstant angesehen werden kann (siehe FIG. 1). Die Symbole werden wieder mit Hilfe eines Matched Filters geschätzt. Die Kanalimpulsantwort wird für jeden Bereich entsprechend der geschätzten Drehung und dem Abstand von der Trainingssequenz bestimmt:

$$\underline{p}_{d,k} = \underline{p}_{0,k} \cdot e^{j\hat{\phi}d/\Delta}$$

$\Delta$ ist der Abstand einer Ersatzpräambel zur Trainingssequenz und d ist der mittlere Abstand eines Bereiches für das endgültige Matched Filter zur Trainingssequenz.

Zur Korrektur der Intersymbolinterferenz können bekannte Standardverfahren angewendet werden (z.B. Viterbi-Entzerrer). Es muß hierbei nicht mehr zwischen verschiedenen Bereichen im Zeitschlitz unterschieden werden, da die Autokorrelationsfunktion der Kanalimpulsantwort nicht von einer Phasendrehung abhängig ist.

FIG. 2 zeigt ein Blockschaltbild des vollständigen Empfängers.

In jedem Empfänger besteht das Problem die Trägerfrequenz analog nachzuführen. Dies kann mit dem obigen Verfahren kombiniert werden. Die geschätzte Phasendrehung gibt nicht nur die Dopplerverschiebung wieder, sondern nach entsprechender Mittelung auch den Versatz der Trägerfrequenz (siehe FIG. 3).

Im folgenden werden einige Simulationsergebnisse für einen GSM Empfänger nach obigem Verfahren gegeben. Das endgültige Matched Filter arbeitet hierbei in drei verschiedenen Bereichen, und als Modulation wird GMSK verwendet (binäre Modulation). Zum Vergleich werden Ergebnisse für einen Empfänger dargestellt, der eine konstante Kanalimpulsantwort im gesamten Zeitschlitz annimmt. Als Ausbreitungsmodell wird das sogenannte "Rural Area" Profil nach den COST 207 Spezifikationen verwendet. Dieses Profil ist im GSM-System eines der Referenzprofile zur Spezifikation der erlaubten Bitfehlerraten. Angegeben wird im folgenden die Restfehlerwahrscheinlichkeit des Demodulators bei Empfang eines Signales mit dem obigen Mehrwegeprofil ohne weitere Störungen durch Rauschen in Abhängigkeit der Geschwindigkeit V.

| V in km/h | 50 | 250 | 500 |
|---|---|---|---|
| Neues Verfahren | $3.2 \cdot 10^{-4}$ | $5.6 \cdot 10^{-3}$ | $2.1 \cdot 10^{-2}$ |
| Verfahren mit konst. angenommener Kanalimpulsantwort | $3.8 \cdot 10^{-4}$ | $9.0 \cdot 10^{-3}$ | $3.3 \cdot 10^{-2}$ |

Die Verbesserung durch das neue Verfahren insbesondere bei hohen Geschwindigkeiten ist deutlich zu sehen. Die folgende Tabelle gibt die Bitfehlerrate des Demodulators bei Empfang des obigen Profiles bei 50 km/h und mit Rauschen ($E_b/N_o = 6$ dB) an:

Neues Verfahren        $6.8 \cdot 10^{-2}$

Verfahren mit konst. angenommener Kanalimpulsantwort        $6.8 \cdot 10^{-2}$

Daraus geht deutlich hervor, daß sich durch die Dopplerkorrektur bei kleinen Geschwindigkeiten keine Verschlechterung der Empfindlichkeit ergibt.

**Patentansprüche**

1. Zeitmultiplex-Verfahren zur Bestimmung der mittleren Phasenänderung des Empfangssignals, bei dem für die Mehrwegeverzögerung mehrere Symbollängen möglich sind und jeder Zeitschlitz in der Mitte eine feste dem Empfänger bekannte Trainingssequenz besitzt, und wobei die Kanalimpulsantwort innerhalb eines Zeitschlitzes mit einer festen dem Empfänger bekannten Trainingssequenz geschätzt wird, <u>dadurch gekennzeichnet</u>,

   - daß im mittleren Teil des Zeitschlitzes eine an die geschätzte Kanalimpulsantwort angepaßte Symbolschätzung durch Demodulation vorgenommen wird,
   - daß rechts und links der Trainingssequenz zwei Bereiche demodulierter Symbole gebildet werden, die nachfolgend Ersatzpräambeln gennant werden,
   - daß zwischen dem Bereich der Ersatzpräambeln und dem Bereich der Trainingssequenz die mittleren Phasendrehungen der Kanalimpulsantwort geschätzt werden,und durch Mittelung über die Winkel der Schätzwert für die genaue Phasendrehung verbessert wird.

2. Verfahren nach Anspruch 1, dadurch gekennzeichnet,

   - daß die Phasendrehung der Kanalimpulsantwort mit einem Empfangssignal mit konstanter Phase innerhalb der Ersatzpräambel dadurch bestimmt wird, daß die konjugiert komplexen, vorab demodulierten Symbole der Ersatzpräambel mit den Empfangssignalabtastwerten korreliert werden und die Kanalimpulsantwort erneut geschätzt wird, und
   - daß die bekannte Kanalimpulsantwort mit der neu geschätzten, konjugiert komplexen Kanalimpulsantwort Abtastwert für Abtastwert multipliziert und aufakkumuliert wird.

3. Verfahren nach Anspruch 2, dadurch gekennzeichnet, daß der Zeitschlitz in mehrere kurze Bereiche annähernd konstanter Phase eingeteilt wird, und

   - daß die Kanalimpulsantwort für jeden Bereich entsprechend der geschätzten Phasendrehung und dem Abstand von der Trainingssequenz durch Demodulation bestimmt wird, und über die mittlere Phasenänderung die Änderung der Kanalimpulsantwort ermittelt wird.

4. Verfahren nach einem der vorherigen Ansprüche, dadurch gekennzeichnet, daß mit der geschätzten Phasendrehung durch entsprechende Mittelung der Versatz der Trägerfrequenz bestimmt wird und über einen Regelkreis die Trägerfrequenz reguliert wird.

## Claims

1. A time division method for determining the average phase variation of the received signal, in which a plurality of symbol lengths are possible for the multi-path delay, and in which each time slot has a fixed training sequence in its center, said training sequence being known to the receiver, and wherein the channel pulse response within a time slot is estimated by means of a fixed training sequence known to the receiver, characterized in that

   a symbol estimation adapted to the estimated channel pulse response is performed by demodulation in the central portion of the time slot,

   two ranges of demodulated signals are formed to the right and to the left of the training sequence, said signal being from now on called substitute preambles,

   the average phase shifts of the channel pulse response are estimated between the range of the substitute preambles and the range of the training sequence, and that the estimated value for the exact phase shift is improved by averaging over the phase angles.

2. A method according to claim 1, characterized in that

   - the phase shift of the channel pulse response with an input signal having a constant phase is defined within the substitute preamble in that the conjugate complex pre-demodulated symbols of the substitute preamble are correlated with the received signal sample values and that the channel pulse response is estimated once more, and

   - that the known channel pulse response is multiplied and accumulated with the newly estimated, conjugate complex channel pulse response sample value by sample value.

3. A method according to claim 2, characterized in that the time slot is divided in a plurality of short ranges of an approximately constant phase, and

   - that the channel pulse response is defined by demodulation for each range in accordance with the estimated phase shift and in accordance with the distance to the training sequence, and that the variation of the channel pulse response is determined by the average phase shift.

4. A method according to one of the preceding claims, characterized in that the shift of the carrier frequency is defined by the estimated phase shift by averaging, and that the carrier frequency is controlled by a control circuit.

## Revendications

1. Procédé de multiplexage par partage dans le temps, permettant de déterminer la variation moyenne de phase du signal de réception, selon lequel plusieurs longueurs de symbole sont possibles pour le retard multivoies et chaque fenêtre de temps comporte en son milieu une séquence d'entraînement fixe connue du récepteur, tandis que la réponse d'impulsion de canal est estimée à l'intérieur d'une fenêtre de temps comportant une séquence d'entraînement fixe connue du récepteur, caractérisé :

   - en ce que, dans la partie centrale de la fenêtre de temps, une estimation de symbole adaptée à la réponse d'impulsion de canal estimée est effectuée au moyen d'une démodulation,
   - en ce que deux zones de symboles démodulés, qui sont appelées ci-après préambules de remplacement, sont formées à droite et à gauche de la séquence d'entraînement et
   - en ce que les rotations de phase moyennes de la réponse d'impulsion de canal sont estimées entre la zone des préambules de remplacement et la zone de la séquence d'entraînement et la valeur estimée est améliorée pour la rotation de phase précise au moyen d'une formation de moyenne sur l'angle.

**2.** Procédé selon la revendication 1, caractérisé :

- en ce que la rotation de phase de la réponse d'impulsion de canal est, avec un signal de réception à phase constante, déterminée à l'intérieur du préambule de remplacement par le fait que les symboles complexes conjugués du préambule de remplacement, pré-démodulés, sont corrélés avec les valeurs de balayage de signal de réception, et la réponse d'impulsion de canal est de nouveau estimée et

- en ce que la réponse d'impulsion de canal connue est multipliée, valeur de balayage par valeur de balayage, par la réponse d'impulsion de canal, complexe conjuguée, nouvellement estimée, et fait l'objet d'un cumul.

**3.** Procédé selon la revendication 2, caractérisé :

- en ce que que la fenêtre de temps est divisée en plusieurs zones courtes à phase approximativement constante et

- en ce que, pour chaque zone, la réponse d'impulsion de canal est déterminée au moyen d'une démodulation d'une manière correspondant à la rotation de phase estimée et à l'écart de la séquence d'entraînement, et la modification de la réponse d'impulsion de canal est établie au moyen de la modification de phase moyenne.

**4.** Procédé selon l'une des revendications précédentes, caractérisé en ce que le décalage de la fréquence porteuse est déterminé avec la rotation de phase estimée au moyen d'une formation de moyenne appropriée et la fréquence porteuse fait l'objet d'une régulation au moyen d'un circuit de régulation.

| | | |
|---|---|---|
| | Trainingsseq. | | Zeitschlitz |

Bereich für
Vorabdemodulation

Ersatzpräambeln

## Fig. 1

$\underline{y}_i$

Kanalimpulsantwortschätzung

$\underline{P}_K$

Vorabdemodulation

$\underline{a}_i$

Winkelschätzung

$\hat{\phi}$

Zur analogen
Trägerfrequenzregelung

## Fig. 2

Endgültige
Demodulation

$\underline{a}_i$

Mischer

RF

A/D   $\underline{y}_i$

digitaler Demodulator
nach Fig. 2

$\underline{a}_i$

$\hat{\phi}$

Trägerfrequenzgenerierung

A/D

Mittelung

## Fig. 3